# EUROPÄISCHE PATENTANMELDUNG

(11) **EP 1 772 490 A1**
(43) Veröffentlichungstag der Anmeldung: **11.04.2007**
(21) Anmeldenummer: 06120205.7
(22) Anmeldetag: 06.09.2006
(51) Int. Cl.: C08L 25/06, C08L 55/02, C08L 51/00, C08K 3/26, C08L 53/02, C08K 9/04

(54) **Formteile auf Basis von Styrolpolymeren und anorganischen Füllstoffen**

(30) Priorität: 29.09.2005 DE 10546818
(71) Anmelder: BASF AKTIENGESELLSCHAFT, 67056 Ludwigshafen (DE)
(72) Erfinder: Die Erfindernennung liegt noch nicht vor

(57) **Zusammenfassung**

Die Erfindung betrifft Formteile, die mindestens eine Stelle aufweisen, an der durch thermische Ausdehnung oder Kontraktion eine Verformungsbehinderung auftritt, und welche eine Mischung aus den folgenden Komponenten enthalten:
A) 35 bis 95 Gew.-% eines Styrolpolymeren, ausgewählt aus Acrylnitril-Butadien-Styrol-Polymer (ABS), Acrylnitril-Styrol-Acrylester-Polymer (ASA), Standard-(GPPS) oder Schlagzäh-Polystyrol (HIPS) oder Mischungen davon,
B) 1 bis 10 Gew.-% eines Styrol-Butadien-Blockcopolymeren, welches aus mindestens zwei Polystyrolblöcken S und mindestens einem Styrol-Butadien-Copolymerblock S/B besteht,
C) 4 bis 55 Gew.-% eines anorganischen Füllstoffes,

wobei die Summe aus A), B) und C) 100 Gew.-% ergibt.

Darüber hinaus betrifft die Erfindung Elektrogeräte, die diese Formteile enthalten. Außerdem betrifft die Erfindung die Verwendung einer Mischung zur Herstellung von Formteilen für Elektrogeräte. Schließlich betrifft die Erfindung ein Verfahren zur Herstellung der eingangs beschriebenen Formteile.

## Beschreibung

Die Erfindung betrifft Formteile, die mindestens eine Stelle aufweisen, an der durch thermische Ausdehnung oder Kontraktion eine Verformungsbehinderung auftritt, und welche eine Mischung aus den folgenden Komponenten enthalten:
A) 35 bis 95 Gew.-% eines Styrolpolymeren, ausgewählt aus Acrylnitril-Butadien-Styrol-Polymer (ABS), Acrylnitril-Styrol-Acrylester-Polymer (ASA), Standard-(GPPS) oder Schlagzäh-Polystyrol (HIPS) oder Mischungen davon,
B) 1 bis 10 Gew.-% eines Styrol-Butadien-Blockcopolymeren, welches aus mindestens zwei Polystyrolblöcken S und mindestens einem Styrol-Butadien-Copolymerblock S/B besteht,
C) 4 bis 55 Gew.-% eines anorganischen Füllstoffes,
wobei die Summe aus A), B) und C) 100 Gew.-% ergibt.

Darüber hinaus betrifft die Erfindung Elektrogeräte, die diese Formteile enthalten. Außerdem betrifft die Erfindung die Verwendung einer Mischung zur Herstellung von Formteilen für Elektrogeräte. Schließlich betrifft die Erfindung ein Verfahren zur Herstellung der eingangs beschriebenen Formteile.

Polymerzusammensetzungen mit anorganischen Füllstoffen sind dem Fachmann an sich weitläufig bekannt. FR-A-2 849 442 offenbart beispielsweise Kautschuke auf Basis von Styrol und einem nanopartikulären Mineralstoff mit Schichtstruktur. Der Kautschuk auf Basis von Styrol enthält mindestens ein Polymer aus der Gruppe kristallines PS, HIPS und Styrolcopolymer einschließlich Block- oder Pfropfcopolymere. Die beanspruchten Mischungen sollen eine verringerte Neigung zur Ausbildung von Rissen gegenüber aggressiven Medien wie Öle, fetthaltige Materialien oder Treibmittelgase besitzen. Als mögliche Anwendungsgebiete werden Verpackungen, Automobilanwendungen, Anwendungen im Bauwesen, im Elektronikbereich und bei Elektrohaushaltsgeräten genannt.

US 5,334,657 offenbart thermoformbare Mischungen auf Basis von Schlagzäh-Polystyrol, Polyolefin und einem verträglichkeitsvermittelnden Polymer, insbesondere ein Blockcopolymer aus Styrol und einem konjugierten Dien, welche aufgrund ihrer Resistenz gegenüber Chemikalien als Kühlschrank-Innenverkleidung eingesetzt werden können. Die Mischungen können optional bis zu 10% Additive oder Hilfsmittel, bevorzugt Talk oder bestimmte organische Verbindungen als thermische Stabilisatoren enthalten.

EP-0 291 352 beschreibt Mischungen auf Basis eines vinylaromatischen Polymers, einem Polyolefin und linearen sowie sternförmig verzweigten Vinylaromat-Dien-Blockcopolymeren, welche eine hohe Stabilität gegenüber Chemikalien wie Ölen und Freon aufweisen und beispielsweise für den Einsatz in Elektrogeräten geeignet sind. In beiden Fällen ist eine sehr komplexe Materialmischung erforderlich, um das erforderliche Eigenschaftsprofil zu erreichen.

DE-10 2004 055 539 beschreibt eine Mischung aus thermoplastischen Elastomeren auf Basis von Styrol, welche anorganische Füllstoffe enthält und als Masterbatch in Abmischungen mit Standard- oder Schlagzähpolystyrol die Spannungsrissbeständigkeit erhöht. Besondere Anwendungen werden nicht erwähnt.

Bislang verhinderte ein limitiertes Eigenschaftsprofil den kommerziellen Einsatz anorganisch gefüllter Mischungen auf Basis von Styrolpolymeren in anspruchsvollen Bereichen wie z. B. in Kühl- oder Gefriergeräten. Ein Ziel der vorliegenden Erfindung war es, Formteile mit anorganischen Füllstoffen auf Basis von ABS, ASA, Standard- oder Schlagzäh-Polystyrol zu finden, die eine verringerte Sprödigkeit bei niedrigen Temperaturen sowie eine verbesserte Spannungsrissbeständigkeit aufweisen. Es war zudem die Aufgabe der vorliegenden Erfindung, durch Zugabe von Füllstoffen zu den Formteilen in Kühl- oder Gefriergeräten eine erhöhte Wärmeleitfähigkeit zu erzielen. Insbesondere sollten solche Formteile gefunden werden, die in anspruchsvollen Bereichen wie in Kühl- oder Gefriergeräten eine geringe Tendenz zur Ausbildung von Spannungsrissen bei Kontakt mit spannungsrissverstärkenden Medien wie öligen Verbindungen oder Treibmitteln aufweisen.

An den Formteilen treten durch Kontraktion bei Abkühlung Spannungen entweder an beanspruchten Stellen im Formteil oder an Kontaktstellen mit Materialien mit unterschiedlichem Ausdehnungskoeffizienten auf. Die durch diese Verformungsbehinderungen erzeugten Spannungen fördern die unerwünschte Ausbildung von Spannungsrissen. Es bestand daher die Aufgabe, Formteile bereitzustellen, die einen geringen thermischen Ausdehnungskoeffizienten (CTE - coefficient of thermal expansion) aufweisen und die insbesondere bei Vorliegen einer Verformungsbehinderung keine Spannungsrisse ausbilden. Schließlich sollten die Formteile ein günstiges Zähigkeit/Steifigkeits-Verhältnis aufweisen.

Die Verarbeitungseigenschaften, z.B. die Ausziehfähigkeit anorganisch gefüllter Polymermischungen auf Basis von Styrolpolymeren sind im allgemeinen limitiert. Ein Verfahren, bei dem ein Thermoformungsschritt trotz hohen Füllgrades ohne Verringerung der Zykluszeit oder apparative Änderungen möglich ist, wäre wünschenswert. Es war die Aufgabe der vorliegenden Erfindung, ein Verfahren zur Herstellung dreidimensional geformter Formteile zur Verfügung zu stellen, in welchem die Formgebung in gängigen Arbeitsschritten bei hoher Produktionsrate erfolgt.

Demgemäß wurden die eingangs beschriebenen Formteile sowie das erfindungsgemäße Verfahren gefunden.

Bevorzugte Ausführungsformen sind den Ansprüchen und der Beschreibung zu entnehmen. Kombinationen aus bevorzugten Ausführungsformen verlassen den Rahmen der Erfindung nicht.

Die Formteile können in ihrer Gestalt in weitem Maße variieren. Die erfindungsgemäßen Formteile können Platten, Folien, Halbzeuge, fertige, dreidimensional geformte Bauteile oder solche, die noch der weiteren Bearbeitung bedürfen, sein. Im Sinne der vorliegenden Erfindung bevorzugt sind jedoch dreidimensional geformte Formteile, die außer am Rand noch weitere Ecken und/oder Kanten und/oder Biegungen aufweisen. Die Formteile können in ihrer Zusammensetzung homogen sein oder als Co-Extrudat und/oder Laminat mindestens zwei Schichten unterschiedlicher Zusammensetzung aufweisen. Die Formteile können unbeschichtet, beschichtet oder hinterschäumt vorliegen und in der Größe sowie in der Dicke in weitem Maße variieren. Die Formteile können eine Wandstärke von 0,1 bis 15 mm aufweisen, bevorzugt von 0,3 bis 8 mm und besonders bevorzugt von 0,3 bis 5 mm.

Eine Verformungsbehinderung kann jede Stelle eines Formteils sein, an der die thermisch induzierte Kontraktion oder Ausdehnung des Formteils in irgendeiner Weise behindert ist. Bevorzugt entstehen Verformungsbehinderungen an Stellen, an denen das Material des Formteils in Kontakt mit mindestens einem weiteren Material steht, dessen thermischer Ausdehnungskoeffizient (CTE) vom CTE des Formteils abweicht. Hierdurch entsteht im Formteil an der Kontaktstelle eine Spannung, da die Verformung behindert ist. Unter CTE soll der lineare thermische Längenausdehnungskoeffizient nach DIN 53752 verstanden werden.

Besonders bevorzugt treten Verformungsbehinderungen an oben beschriebenen Stellen auf, wenn der CTE des weiteren Materials um mindestens 10 % vom CTE des Formteils abweicht. Ganz besonders bevorzugt treten Verformungsbehinderungen an oben beschriebenen Stellen auf, wenn der CTE des weiteren Materials um mindestens 20 % vom CTE des Formteils abweicht. Im allgemeinen treten Verformungsbehinderungen bereits auf, wenn das Formteil oder ein Teilbereich des Formteils Temperaturänderungen von mindestens 10°C ausgesetzt ist. Besonders häufig treten Verformungsbehinderungen auf, wenn das Formteil oder ein Teilbereich des Formteils Temperaturänderungen von mindestens 20°C, und insbesondere, wenn es Temperaturänderungen von mindestens 50°C ausgesetzt ist. Verformungsbehinderungen können sowohl beim Abkühlen als auch beim Erwärmen auftreten. Bevorzugt treten die beschriebenen Verformungsbehinderungen auf, wenn die Temperaturänderung durch eine Abkühlung auftritt.

Weiterhin treten Verformungsbehinderungen an den beschriebenen Stellen bevorzugt auf, wenn die durch Temperaturerhöhung bzw. -erniedrigung induzierte Längenausdehnung bzw. -kontraktion des Formteils in mindestens einer Raumrichtung mindestens 0,1 %, besonders bevorzugt mindestens 0,15 % des Ursprungswertes vor der Temperaturänderung beträgt. Verformungsbehinderungen können auch an Stellen entstehen, die aufgrund der Geometrie oder Gestalt des Formteils in ihrer Verformung behindert sind. Bevorzugt treten Verformungsbehinderungen in Ecken und/oder an Kanten und/oder an Biegungen des Formteils auf. Beispielsweise liegt entlang der Kante oder Biegung des Formteils eine Verformungsbehinderung vor, da die Ausdehnung bzw. Kontraktion einer Fläche bzw. Wand durch die Anwesenheit der angrenzenden Wand desselben Formteils behindert wird.

Kontaktstellen zwischen verschiedenen Materialien können viele unterschiedliche Formen annehmen. Kontaktstellen können in ihrer geometrischen Form punktförmig, eine Linie, oder eine Fläche sein. Der Kontakt mit einem anderen Material kann grundsätzlich direkt oder indirekt vorliegen. Im Falle des direkten Kontaktes kann das mit dem Formteil in Kontakt befindliche verschiedene Material aufgesteckt, angeklemmt oder mindestens teilweise in das Formteil eingegossen, -gespritzt oder geformt sein. Außerdem kann es sich um den direkten Kontakt mit einem Klebstoff handeln. Im Falle einer indirekten Kontaktstelle erfolgt der Kontakt mit einem weiteren Material durch ein vermittelndes Material. Ein indirekter Kontakt ist bevorzugt durch einen Klebstoff gegeben, mit dem ein Material mit unterschiedlichem CTE auf das Formteil geklebt ist. Als Klebstoff kommen grundsätzlich alle Klebstoffe in Betracht, die auf dem Formteil haften. Bevorzugt wird eine Verformungsbehinderung im Bereich eines Verdampfers in einem Kühl- oder Gefriergerät verursacht. Der Verdampfer besteht meist aus Metall und kann beispielsweise auf die Rückwand der Innenverkleidung aufgeklebt werden.

Die beschriebenen Verformungsbehinderungen spielen insbesondere in gekühlten Umgebungen eine Rolle. Bei Abkühlung auf Betriebstemperatur, beispielsweise in Kühl- oder Gefriergeräten, zieht sich das Material gemäß seinem CTE zusammen. An Stellen mit Verformungsbehinderung besteht eine besonders hohe Wahrscheinlichkeit der Ausbildung von Spannungsrissen. Spannungsrisse werden außer durch Verformungsbehinderungen durch eine Reihe anderer Faktoren begünstigt. Beispielsweise können bestimmte Medien wie Öle oder Fette in das Formteil eintreten und begünstigen hierbei die Ausbildung eines Spannungsrisses. Im Bereich von Kühl- oder Gefriergeräten sind insbesondere Speiseöle und -fette sowie Treibmittel bekannte Auslöser von Spannungsrissen. Eine Temperatursenkung wirkt ebenfalls begünstigend auf die Ausbildung unerwünschter Spannungsrisse, da Polymermaterialien dann spröder sind.

Unter Spannungsrissen sollen unerwünschte Risse in Formteilen verstanden werden, die durch Spannungen im Formteil selbst und/oder durch Kräfte, die auf das Formteil wirken und Spannungen im Formteil auslösen, verursacht werden. Solche Spannungen im Formteil können beispielsweise im Laufe der thermischen Vorgeschichte entstanden sein. Spannungen im Material oder Formteil werden bevorzugt durch Temperaturänderungen ausgelöst.

Die Spannungsrissbeständigkeit (ESCR - environmental stress cracking resistance) kann beispielsweise charakterisiert werden, indem man die Bruchdehnung von Zugprüfstäben nach Einwirkung spannungsrissauslösender Medien misst. Im folgenden soll als Maß für die ESCR die Bruchdehnung in % nach ISO 527 von spritzgegossenen Zugprüfstäben verstanden werden, die sich ergibt, nachdem die Stäbe gemäß der Biegestreifenmethode nach ISO 4599 über Biegeschablonen mit dem Radius 170 mm gespannt einer 24-stündiger Einwirkung einer Mischung aus Olivenöl/Ölsäure im Verhältnis 1:1 ausgesetzt wurden. Bevorzugt beträgt die Bruchdehnung der beschriebenen Formteile gemessen gemäß ISO 527 nach 24-stündiger Einwirkung einer Mischung aus Olivenöl/Ölsäure im Verhältnis 1:1 mindestens 5 %, besonders bevorzugt mindestens 10 %.

Bevorzugt enthalten die erfindungsgemäßen Formteile als Komponente
A) 60 bis 93 Gew.-% mindestens eines der oben genannten Styrolpolymeren, als Komponente
B) 2 bis 5 Gew.-% mindestens eines der oben genannten Styrol-Butadien-Blockcopolymeren,
   und als Komponente
C) 5 bis 35 Gew.-% mindestens eines anorganischen Füllstoffes,
wobei die Summe aus A), B) und C) 100 Gew.-% ergibt. Besonders bevorzugt enthalten die Formteile 60-88 Gew.-% der Komponente A), 2-5 Gew.-% der Komponente B) und 10-35 Gew.-% der Komponente C.

### Komponente A

Als Styrolpolymere eignen sich die als Acrylnitril-Butadien-Styrol-Polymer (ABS) oder Acrylnitril-Styrol-Acrylester-Polymer (ASA) bekannten Polymere. Der Aufbau von ABS und ASA ist dem Fachmann an sich bekannt. Sie bestehen in der Regel aus einer Styrol-Acrylnitril-Copolymer Matrix (SAN) mit einem mittleren Molekulargewicht Mw im Bereich von 40.000 bis 250.000 g/mol und einem Pfropfkautschuk. Die Herstellung der Styrolpolymere ist dem Fachmann ebenfalls an sich bekannt. Die SAN-Matrix kann in bekannter Weise durch Substanz-, Lösungs- Suspension-, Fällungs- oder Emulsionspolymerisation erhalten werden. Des Weiteren enthalten ABS und ASA einen Pfropfkautschuk. Der Pfropfkautschuk besteht in der Regel aus einer Pfropfgrundlage aus einem Polydien oder Acrylester, auf den eine Pfropfauflage aus Styrol und Acrylnitril und/oder Methylmethacrylat aufgebracht ist.

Des weiteren eignen sich Standardpolystyrol (GPPS - general purpose polystrene), Schlagzäh-Polystyrol (HIPS - high impact poylstyrene) oder Mischungen davon. Schlagzäh-Polystyrol kann durch Masse- oder Lösungspolymerisation von Styrol in Gegenwart von Polybutadien oder Styrol-Butadien-Blockcopolymeren erhalten werden. Dabei entsteht eine Matrix aus Polystyrol mit eingeschlossenen Kautschukpartikeln, die unterschiedliche Morphologien ausbilden können, z. B. Kapselteilchen, Salamiteilchen oder Zellenteilchen, und unterschiedliche mittlere Teilchengrößen aufweisen können. Derartige Styrolpolymere sind dem Fachmann an sich bekannt oder können nach dem Fachmann an sich bekannten Methoden hergestellt werden.

### Komponente B

Erfindungsgemäß wird als Styrol-Butadien-Blockcopolymer mindestens ein Blockcopolymer eingesetzt, welches aus mindestens zwei Polystyrolblöcken S und mindestens einem Styrol-Butadien-Copolymerblock S/B besteht. Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-0 654 488 beschrieben sind.

Bevorzugt werden Blockcopolymere mit mindestens zwei Hartblöcken S1 und S2 aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO-00/58380 beschrieben sind.

Besonders bevorzugt wird als Komponente B ein Styrol-Butadien-Blockcopolymer mit elastomeren Eigenschaften, ein sogenanntes thermoplastisches Elastomer (S-TPE), eingesetzt. Bevorzugt weist das S-TPE eine Reißdehnung von mehr als 300 %, besonders bevorzugt mehr als 500 %, insbesondere mehr als 600 %, gemessen nach ISO 527, auf. Besonders bevorzugt setzt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%. Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew.-%. Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-% bezogen auf das gesamte Blockcopolymer.

Bevorzugt sind lineare Styrol-Butadien-Blockcopolymere der allgemeinen Struktur S-(S/B)-S. Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymere sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 bis 16 %.

### Komponente C

Als anorganische Füllstoffe kommen zum Beispiel Metalloxide, Silikate, Sulfate, Carbonate, Kieselsäure, Kieselgur, Quarzmehl, oder Mischungen aus zwei oder mehreren dieser Füllstoffe in Betracht. Bevorzugte Metalloxide sind Titandioxid, Zinkoxid, Aluminiumoxid und Magnesiumoxid. Bevorzugte Sulfate sind Bariumsulfat und Calciumsulfat. Bevorzugte Silikate sind Talk, Kaolin, Mica und Wollastonit. Bevorzugte Carbonate sind Carbonate der Erdalkalimetalle. Als anorganische Füllstoffe sind solche auf Basis natürlicher, gemahlener Mineralien oder solche auf Basis synthetischer Varianten geeignet.

Als anorganische Füllstoffe besonders bevorzugt sind Calciumcarbonat und Titandioxid. Besonders bevorzugt besteht die Komponente C aus Titandioxid und/oder Calciumcarbonat. Ganz besonders bevorzugt wird Calciumcarbonat alleine oder in Mischung mit einem oder mehreren der oben aufgeführten anorganischen Füllstoffe eingesetzt.

Gefälltes oder synthetisches Calciumcarbonat (precipitated calcium carbonate, PCC) besteht häufig aus besonders kleinen (kleiner 1 Mikrometer) und regelmäßig geformten Partikeln, die oberflächenmodifiziert sein können. PCC ist aufgrund seiner besonderen Teilchengrößenverteilung als Komponente C ganz besonders bevorzugt geeignet. Gemahlenes Calciumcarbonat (ground calcium carbonate, GCC) besteht häufig aus größeren Teilchen (größer 1 Mikrometer) und kann durch Mahlen von Kalkstein oder Kreide oder aus anderen natürlichen Mineralien gewonnen werden und kann gegebenenfalls oberflächenmodifiziert vorliegen. Üblicherweise wird GCC in wirtschaftlich besonders günstigen Herstellungsverfahren eingesetzt. GCC ist als Komponente C ganz besonders bevorzugt geeignet.

Als Komponente C können anorganische Füllstoffe mit einem Aspektverhältnis von 1 bis 100 eingesetzt werden. Unter Aspektverhältnis ist das Verhältnis von längstem zu kürzestem Radius durch das geometrische Zentrum des Partikels zu verstehen. Bevorzugt werden als Komponente C anorganische Füllstoffe mit einem Aspektverhältnis von 1 bis 10, insbesondere 1 bis 4. Besonders bevorzugt kommen anorganische Füllstoffe, insbesondere Calciumcarbonat, mit einem Aspektverhältnis nahe 1, beispielsweise von 1 bis 2, zum Einsatz.

Die Teilchengröße der Füllstoffe kann in einem breiten Fenster variieren. Bevorzugt werden anorganische Füllstoffe mit einer mittleren Teilchengröße von 10 nm bis 10 Mikrometer zugegeben, besonders bevorzugt solche mit einer mittleren Teilchengröße von 50 nm bis 5 Mikrometer.

Die Teilchendurchmesser können z. B. bestimmt werden, indem elektronenmikroskopische Aufnahmen von Dünnschnitten der Polymermischung oder des Formteils aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). In Abhängigkeit von der Siebgröße kann der Gewichtsanteil der Füllstoffe unterhalb eines bestimmten Durchmessers auch mittels Siebanalyse bestimmt werden.

Die anorganischen Füllstoffe können oberflächenmodifiziert oder unbeschichtet eingesetzt werden. Bevorzugt werden die anorganischen Füllstoffe mit einem Haftvermittler beschichtet eingesetzt. Ebenso bevorzugt sind hydrophob oberflächenmodifizierte anorganische Füllstoffe. Als Oberflächenmodifikation kommt insbesondere eine Beschichtung mit Stearinsäure in Frage.

Die Einbindung der anorganischen Füllstoffe lässt sich zudem oft durch Zugabe von Dispergierhilfsmitteln verbessern. Bevorzugt enthalten die Formteile 0 bis 8 Gewichtsteile Dispergierhilfsmittel bezogen auf 100 Gewichtsteile der Mischung aus den Komponenten A bis C. Ganz besonders bevorzugt enthält die Mischung 0,1 bis 4 Gewichtsteile Dispergierhilfsmittel bezogen auf 100 Gewichtsteile der Mischung aus den Komponenten A bis C. Als Dispergierhilfsmittel eignen sich niedermolekular Wachse, z. B Polyethylenwachse oder Stearate, wie Magnesium- oder Calciumstearat.

Als Einsatzstoffe bei der Herstellung der thermostabilen Formteile können neben der beschriebenen Mischung verschiedene andere Materialien zugesetzt werden. Bevorzugt werden der Mischung bei der Extrusion zu Platten oder Folien, die anschließend thermogeformt werden, Verarbeitungshilfsstoffe oder weitere Füllstoffe, die nicht der Komponente C entsprechen, insbesondere Pigmente, zugesetzt.

Gegebenenfalls können die erfindungsgemäßen Formteile weitere thermoplastische Polymere, wie Polyolefine, z.B. Homo- oder Copolymere von Ethylen oder Propylen, oder Homo- oder Copolymere aus Acrylaten, z.B. Methylmethacrylat oder Polyphenylenether enthalten. Als weiteres thermoplastisches Polymer bevorzugt ist Polyethylen sowie Polyethylen in Mischungen mit einem weiteren Polymer oder weiteren Polymeren. Bevorzugt sind die weiteren thermoplastischen Polymere als co-extrudierte Schicht oder als Bestandteil einer co-extrudierten Schicht, zum Beispiel eine co-extrudierte Schicht aus einem Polystyrol/Polyethylen-Blend, enthalten. Bevorzugt enthalten die erfindungsgemäßen Formteile 0,2 bis 5 Gew.-% eines weiteren thermoplastischen Polymers oder weiterer thermoplastischer Polymere, bezogen auf die Masse des gesamten Formteils.

Durch Einmischen eines chemischen oder physikalischen Treibmittels, beispielsweise eines anorganischen Gases wie Stickstoff oder Kohlendioxid, lassen sich die Mischungen außerdem zu Schaumstoffsträngen oder-platten verarbeiten.

### Verfahren zur Herstellung der Formteile

Die erfindungsgemäßen Formteile sind herstellbar durch Thermoformen, Extrusion, Spritzguss oder andere dem Fachmann bekannte Formgebungsverfahren für Kunststoffbauteile. Bevorzugt werden die thermostabilen Formteile durch ein Verfahren hergestellt, in dem die Formgebung durch Thermoformen erfolgt.

Thermoformen in seinen verschiedenen Varianten zur Herstellung dreidimensionaler Formteile aus Kunststoff ist hinreichend bekannt und beispielsweise in Encyclopedia of Polymer Science and Engineering, 2. Auflage, Wiley-Interscience, Vol. 16, 807-832 (1989) beschrieben. Große, dreidimensional geformte Formteile wie Kühlschrank-Innenverkleidungen werden üblicherweise durch Thermoformen geformt. Beim Thermoformen wird die einzusetzende Mischung in Form einer Platte oder Folie durch Erwärmen erweicht und durch biaxialen Zug sowie üblicherweise mit Vakuum und/oder Druckluft auf einen Formkörper positioniert. Im Anschluss daran werden die gestreckten und erweichten Platten oder Folien durch Kontakt mit dem üblicherweise temperierten Formkörper dreidimensional geformt, woran sich ein Abkühlungsschritt anschließt.

Für das erfindungsgemäße Verfahren können erfindungsgemäße Formteile in Form von Platten oder Folien eingesetzt werden. Die erfindungsgemäßen Platten oder Folien können aus den beschriebenen Mischungen durch Extrusion oder Coextrusion mit weiteren Polymermischungen gewonnen werden. Optional können vor oder während der Extrusion weitere Zusatzstoffe oder Verarbeitungshilfsmittel hinzugegeben werden. Bevorzugt werden die eingesetzten Formteile in Form von Platten oder Folien durch das erfindungsgemäße Verfahren so geformt, dass dreidimensional geformte Formteile entstehen, die außer am Rand noch weitere Ecken und/oder Kanten und/oder Biegungen aufweisen.

Die Mischung aus den Komponenten A bis C sowie weiteren Zusätzen lässt sich auf vielfältige Weise bewerkstelligen. Bevorzugt wird die Komponente C mit der Komponente B sowie gegebenenfalls weiteren Zusätzen zu sogenannten Masterbatchen verarbeitet, welche den anorganischen Füllstoff C in hoher Konzentration enthalten. Die so hergestellten Masterbatche haben im allgemeinen eine hohe Fließfähigkeit. Die Abmischung der Masterbatche enthaltend die Komponenten B und C mit der Komponente A sowie gegebenenfalls mit weiteren Zusätzen erfolgt bevorzugt nach an sich bekannten Mischverfahren, beispielsweise durch Zugabe der Komponente B und C zu einer Schmelze von Komponente A. Zweckmäßigerweise verwendet man hierzu Extruder, z. B. Einschnecken- oder Zweischneckenextruder oder andere herkömmliche Plastifizierungsvorrichtungen, wie Brabender-Mühlen oder Banbury-Mischer. Bevorzugt werden die Mischungen zu den oben beschriebenen erfindungsgemäßen Platten oder Folien verarbeitet, welche schließlich zu den erfindungsgemäßen Formteilen weiterverarbeitet werden.

Die für die Herstellung der Formteile verwendeten Platten oder Folienbahnen haben im allgemeinen eine Dicke von 0,5 bis 10 mm. Für die Türenfertigung von Kühl- oder Gefriergeräten nach dem beschriebenen Verfahren werden bevorzugt Platten oder Folienbahnen der Dicken 0,8 bis 3 mm eingesetzt. Für die Fertigung von Innenbehältern von Kühl- oder Gefriergeräten wird bevorzugt Plattenmaterial von 1 bis 8 mm Dicke eingesetzt, besonders bevorzugt von 2 bis 5 mm Dicke.

Die aus dem Verfahren resultierenden Formteile haben eine Wandstärke von 0,1 bis 8 mm. Bevorzugt haben die geformten Tür-Innenverkleidungen von Kühl- oder Gefriergeräten eine Dicke von 0,3 bis 3 mm, besonders bevorzugt von 0,3 bis 2 mm. Die geformten Innenbehälter von Kühl- oder Gefriergeräten haben bevorzugt eine Dicke von 0,3 bis 5 mm, besonders bevorzugt 0,3 bis 4 mm.

Die erfindungsgemäßen Formteile können insbesondere auch hinterschäumt vorliegen. Bevorzugt sind solche Formteile, die ohne weiteren Schutz mit Polyurethan hinterschäumt vorliegen.

Die Erwärmung beim Thermoformen kann durch Konvektion, Kontakt oder Infrarot erfolgen. Die Erwärmung kann von einer Seite oder von beiden Seiten stattfinden. Bevorzugt wird bei Wandstärken von mehr als 2 mm eine beidseitige Erwärmung durchgeführt.

Besonders bevorzugt erfolgt im erfindungsgemäßen Arbeitsschritt des Thermoformens eine Verstreckung der jeweiligen Platte oder der betreffenden Folie, bevor es auf einen Formkörper aufgebracht wird. Besonders bevorzugt erfolgt eine biaxiale Verstreckung vor der Aufbringung auf den Formkörper. Besonders bevorzugt ist der Formkörper vortemperiert.

Die Abkühlung nach Formgebung kann durch Kontakt mit dem temperierten Formkörper selbst, durch Konvektion, durch Unterstützung durch einen Ventilator (forced convection), oder unterstützt durch spray nozzle cooling mit Wassertröpfchen sowie durch eine Kombination dieser Methoden erfolgen. Die zum Thermoformen verwendeten Maschinen können aus einer Station (single-station) oder aus mehreren Stationen (multistation) bestehen.

In dem erfindungsgemäßen Verfahren ist es außerdem möglich, Folien oder Platten einzusetzen, die einen mehrschichtigen Aufbau haben, um mehrschichtige Formteile herzustellen. Mehrschichtige Platten oder Folien auf Basis der beschriebenen Komponenten können durch Co-Extrusion oder Laminierung der beschriebenen Mischungen mit weiteren Polymeren oder Polymermischungen hergestellt werden. Bevorzugt sind insbesondere Co-Extrudate mit einer Schicht aus Schlagzäh-Polystyrol und StandardPolystyrol als Glanzschicht.

### Verwendung der Formteile

Die erfindungsgemäßen Formteile sind vielfältig einsetzbar. Bevorzugt werden die Formteile in Umgebungen eingesetzt, in denen sie Temperaturänderungen ausgesetzt sind. Besonders bevorzugt werden die Formteile in gekühlten Umgebungen eingesetzt. Sie können in Kühlgeräten, Gefriergeräten, Gefriertruhen, Verpackungen, Transportbehälter, Aufbewahrungsbehältern, Haushaltsgeräten und im Automobilbau eingesetzt werden. Besonders bevorzugt werden die Formteile als Innenbehälter von Kühl- oder Gefriergeräten eingesetzt. Ebenso bevorzugt werden die Formteile als TürInnenverkleidung von Kühl- oder Gefriergeräten eingesetzt.

Die erfindungsgemäßen Formteile zeichnen sich dadurch aus, dass bei Zugabe von signifikanten Mengen an anorganischen Füllstoffen C) zur Komponente A) die Verschlechterung des mechanischen Eigenschaftsprofils in der thermoplastischen Formmasse durch den Zusatz der Komponente B) teilweise kompensiert oder sogar eine Verbesserung erzielt wird. Hierdurch wird ein niedriger CTE und eine hohe Wärmeleitfähigkeit der Formteile bei gleichzeitig günstigen mechanischen Eigenschaften möglich. Hinsichtlich der ESCR wirken die Komponenten B) und C) synergistisch, indem die gleichzeitige Zugabe von B) und C) zu A) zu besonders hohen Werten bei der ESCR führt. Des Weiteren sind die Formteile weniger empfindlich gegen Fremdpolymere und Verunreinigungen, da die Komponente B) eine gute Verträglichkeit zu verschiedenen thermoplastischen Polymeren, insbesondere zu verschiedenen Styrolpolymeren und Polyolefinen aufweist.

Die erfindungsgemäßen Formteile weisen insbesondere gegenüber den bisher bei Innenbauteilen von Kühl- und Gefriergeräten verwendeten Materialien folgende Vorteile auf:
- erhöhte Spannungsrissbeständigkeit bei Kontakt mit spannungsrissverstärkenden Medien
- günstige Zähigkeit- und Steifigkeitseigenschaften auch bei tiefer Temperatur trotz hoher Füllgrade
- verringerte thermische Ausdehnung bzw. Kontraktion
- verringerte Spannungsrissausbildung in Bereichen mit Verformungsbehinderungen, insbesondere im Bereich des Verdampfers von Kühl- oder Gefriergeräten
- erhöhte Wärmeleitfähigkeit, so dass Wärme aus dem Inneren von Kühl- oder Gefriergeräten effizient abgeführt werden kann
- Herstellung durch Thermoformen in bekannten Verfahren trotz hoher Füllgrade.

### Beispiele

### a) Einsatzstoffe

Komponente A1: Schlagzähpolystyrol mit Charpy Kerbschlagzähigkeit nach ISO-179/1 eA bei 23°C von 10 kJ/m² und bei -30°C von 7 kJ/m² sowie einer nominellen Bruchdehnung nach ISO-527-1/-2 bei 50 mm/min von 50%, beispielsweise PS 2710 der BASF Aktiengesellschaft, welches verbreitet in Kühl- und Gefriergeräten eingesetzt wird.
Komponente B1: S-TPE auf Basis eines Styrol-Butadien-Blockcopolymeren mit statistischem S/B-Mittelblock und einer Glastemperatur von -40°C, einer Reißdehnung nach DIN 53455 von >650% und einer Reißfestigkeit nach DIN 53455 von 33 MPa, beispielsweise Styroflex® 2G66 der BASF Aktiengesellschaft.
Komponente C1:Mit Stearinsäure beschichtetes Calciumcarbonat, beispielsweise Carbital^{™} 110 S der Imerys Company, Cornwall, England mit einer mittleren Teilchengröße von 2 µm.

**Tabelle 1: Zusammensetzung der Mischungen**

| Beispiel | Komponente A1[Gew.-%] | B1 [Gew.-%] | C1 [Gew.-%] |
|---|---|---|---|
| 1V | 100 | 0 | 0 |
| 2V | 80 | 0 | 20 |
| 3 | 77 | 3 | 20 |
| 4 | 75 | 5 | 20 |

### b) Prüfmethoden und Eigenschaften

Mischungen mit den in Tabelle 1 angegebenen Zusammensetzungen wurden in einem ZSK 30-Extruder bei einer Temperatur von 220°C bei 200 u/min gemischt und granuliert. Aus den Granulaten wurden bei 170°C und 200 bar 3 mm dicke Schulterprüfstäbe und Zugprüfstäbe gepresst.

Die Kerbschlagzähigkeit wurde als sogenannter aₖ-Wert bei 23°C gemäß ISO 179-2/1 EA (F) gemessen. Die Steifigkeit wurde als Elastizitätsmodul (E-Modul) im Zugversuch bei einer Zuggeschwindigkeit von 1 mm/min bei 23°C nach ISO 527 bestimmt.

Der thermische Ausdehnungskoeffizient (CTE) wurde gemäß DIN 53 752A ermittelt,
wobei in Tabelle 2 abweichend von der oben genannten Norm der Mittelwert über einen Temperaturbereich von -27°C und +36°C gemessen in Längsrichtung an einem Probenkörper angegeben ist.

Die Wärmeleitfähigkeit wurde bei 23°C mit der "Transient Plane Source" (TPS)-Technik mit einem Analysator der Firma Hot Disk AB (Schweden) bei einem Sensorradius von 3,3 mm an den oben genannten Zugprüfstäben bestimmt. Der angegebene Wert ist der Mittelwert aus 10 Einzelmessungen.

Zur Beurteilung der Spannungsrissbeständigkeit (ESCR) wurde die in Anlehnung der in der ISO 4599 beschriebenen "Biegestreifenmethode" ermittelte Bruchdehnung herangezogen. Hierfür wurden die Zugprüfstäbe über Biegeschablonen mit dem Radius 170 mm gespannt und die so unter Zugspannung stehende Oberfläche mit einer Mischung aus Olivenöl/Ölsäure (1:1) bestrichen, 24 h gelagert und anschließend im Zugversuch gemäß ISO 527 vermessen. Die angegebene Bruchdehnung ist die nach ISO 527 gemessene prozentuale Längenausdehnung des wie oben behandelten Zugprüfstabes nach Bruch.

Die Eigenschaften der erfindungsgemäßen Beispiele 3 und 4 sowie der Vergleichsversuche 1V und 2V sind in Tabelle 2 zusammengestellt.

**Tabelle 2: Eigenschaften der Mischungen**

| Beispiel | Wärmeleitfähigkeit [W/mK] | Kerbschlagzähigkeit aₖ bei 23°C [kJ/m²] | E-Modul [MPa] | CTE [10⁻⁶/K] | | Bruchdehnung [%] Lagerung Olivenöl /Olsäure |
|---|---|---|---|---|---|---|
| | | | | Abkühlend | Aufheizend | |
| 1V | 0,186 | 9,7 | 1563 | 86,8 | 83,1 | 4,5 |
| 2V | 0,227 | 6 | 2202 | 61,2 | 61,2 | 2,1 |
| 3 | 0,228 | 6,3 | 2054 | 63,3 | 62,9 | 4,7 |
| 4 | 0,225 | 6,6 | 1971 | 75,9 | 72,6 | 15,1 |

### d) Herstellung der Formteile

Zur Überprüfung der Ausziehfähigkeit wurden die Mischungen mit den in Tabelle 1 angegebenen Zusammensetzungen in einem ZSK 30-Extruder bei einer Temperatur von 240°C bei 200 upm direkt zu Platten mit einer Dicke von 1,2 mm extrudiert. Die Platten wurden anschließend zu Bechern bei einer Zykluszeit von 39 Bechern pro Minute thermoverformt. Der Durchmesser am oberen Rand betrug 6,8 cm und am unteren Boden 5,4 cm. Die Wanddicke schwankte zwischen 0,15 und 0,2 mm Dicke. In allen Fällen wurde eine ausreichende Ausziehfähigkeit beobachtet.

## Patentansprüche

1. Formteile, die mindestens eine Stelle aufweisen, an der durch thermische Ausdehnung oder Kontraktion eine Verformungsbehinderung auftritt, enthaltend
A) 35 bis 95 Gew.-% mindestens eines Styrolpolymeren, ausgewählt aus Acrylnitril-Butadien-Styrol-Polymer (ABS), Acrylnitril-Styrol-Acrylester-Polymer (ASA), Standard-(GPPS) oder Schlagzäh-Polystyrol (HIPS) oder Mischungen davon,
B) 1 bis 10 Gew.-% mindestens eines Styrol-Butadien-Blockcopolymeren, welches aus mindestens zwei Polystyrolblöcken S und mindestens einem Styrol-Butadien-Copolymerblock S/B besteht
C) 4 bis 55 Gew.-% mindestens eines anorganischen Füllstoffes,
wobei die Summe aus A), B) und C) 100 Gew.-% ergibt.

2. Formteile nach Anspruch 1, **dadurch gekennzeichnet, dass** das Styrol-Butadien-Blockcopolymere der Komponente B) einen Styrolgehalt von 50 bis 85 Gew.-% aufweist.

3. Formteile nach den Ansprüchen 1 oder 2, **dadurch gekennzeichnet, dass** das Styrol-Butadien-Blockcopolymere der Komponente B) außenliegende Styrolblöcke aufweist.

4. Formteile nach den Ansprüchen 1 bis 3, **dadurch gekennzeichnet, dass** als Styrol-Butadien-Blockcopolymer der Komponente B) mindestens ein thermoplastisches Elastomer verwendet wird.

5. Formteile nach den Ansprüchen 1 bis 4, **dadurch gekennzeichnet, dass** die Komponente C) Calciumcarbonat enthält.

6. Formteile nach den Ansprüchen 1 bis 5, **dadurch gekennzeichnet, dass** die Verformungsbehinderung durch eine Kontaktstelle mit mindestens einem Material verursacht wird, dessen thermischer Ausdehnungskoeffizient vom thermischen Ausdehnungskoeffizienten der Formteile abweicht.

7. Formteile nach den Ansprüchen 1 bis 6, **dadurch gekennzeichnet, dass** eine Verformungsbehinderung aufgrund einer Kontaktstelle mit einem Metall auftritt.

8. Elektrogerät enthaltend mindestens ein Formteil gemäß den Ansprüchen 1 bis 7.

9. Elektrogerät nach Anspruch 8, **dadurch gekennzeichnet, dass** es sich um ein Kühl- oder Gefriergerät handelt.

10. Verfahren zur Herstellung von Formteilen gemäß den Ansprüchen 1 bis 7, **dadurch gekennzeichnet, dass** das Verfahren mindestens einen Arbeitsschritt umfasst, in dem die Formgebung durch Thermoformen erfolgt.

11. Verfahren zur Herstellung eines Elektrogerätes, **dadurch gekennzeichnet, dass** durch Einbau mindestens eines Formteiles gemäß den Ansprüchen 1 bis 7 mindestens eine Stelle erzeugt wird, an der bei thermischer Ausdehnung oder Kontraktion eine Verformungsbehinderung auftritt.

12. Verwendung einer Mischung, enthaltend
A) 35 bis 95 Gew.-% eines Styrolpolymeren, ausgewählt aus Acrylnitril-Butadien-Styrol-Polymer (ABS), Acrylnitril-Styrol-Acrylester-Polymer (ASA), Standard-(GPPS) oder Schlagzäh-Polystyrol (HIPS) oder Mischungen davon,
B) 1 bis 10 Gew.-% eines Styrol-Butadien-Blockcopolymeren, welches aus mindestens zwei Polystyrolblöcken S und mindestens einem Styrol-Butadien-Copolymerblock S/B besteht,
C) 4 bis 55 Gew.-% eines anorganischen Füllstoffes,
wobei die Summe aus A), B) und C) 100 Gew.-% ergibt, zur Herstellung von Formteilen für Elektrogeräte.

13. Verwendung einer Mischung nach Anspruch 12 zur Herstellung von Formteilen für Kühlschränke.

14. Verwendung einer Mischung nach Anspruch 12 zur Herstellung von Formteilen für Kühlschrank-Innenverkleidungen.
